# EUROPEAN PATENT APPLICATION

(11) **EP 4 040 637 A1**
(43) Date of publication of application: **10.08.2022**
(21) Application number: 21155156.9
(22) Date of filing: 04.02.2021
(51) Int. Cl.: H02J 50/12, H02J 50/80

(54) **ADAPTIVE CHARGER FOR WIRELESS CHARGING**

(71) Applicant: Panthronics AG, 8041 Graz (AT)
(72) Inventor: Schlager, Tobias, 8041 Graz (AT); Pieber, Michael, 8041 Graz (AT); Goitre, Alessandro, 8041 Graz (AT); Antonetti, Francesco, 8041 Graz (AT)
(74) Representative: Schwarz & Partner Patentanwälte GmbH

(57) **Abstract**

A system (17) of a power device (1) and a portable device (18) for wireless charging of a battery (3) of the portable device (18), which power device (1) comprises an antenna (4) to receive power adjustment information (16) from the portable device (18) to increase or to decrease the power of the magnetic field emitted by the antenna (4) of the power device (1) and which portable device (18) comprises an antenna (5) exposed to the magnetic field and connected via a matching stage (15) to a rectifier stage (6) to rectify an antenna signal and to provide an input voltage (Ui) at an input pin of a charge stage (19) that provides a first charge current (I_{C}) at an output pin connected to the battery (3) to charge the battery (3) for a first period of time (T1) as power source with the constant first charge current (Ic) wherein, charge stage (19) comprises a measuring stage (23), to measure the actual voltage (U_{BAT}) of the battery (3), and that comprises a charge voltage control stage (24), that is built to generate the power adjustment information (16) for the power device (1) to increase or to decrease the power of the magnetic field to steer the input voltage (U_{I}) of the charge stage (19) to essentially follow the actual voltage (U_{BAT}) of the battery (3).

## Description

### FIELD OF THE INVENTION

The present invention relates to a system of a power device and a portable device for wireless charging of a battery of the portable device, which power device comprises an antenna to receive power adjustment information from the portable device to increase or to decrease the power of the magnetic field emitted by the antenna of the power device and which portable device comprises an antenna exposed to the magnetic field and connected via a matching stage to a rectifier stage to rectify an antenna signal and to provide an input voltage at an input pin of a charge stage that provides a first charge current at an output pin connected to the battery to charge the battery for a first period of time as power source with a constant first charge current.

### BACKGROUND OF THE INVENTION

Wireless charging is used for all kind of different portable devices like a mobile phone or earphones. The portable device just has to be dropped close-by a power device that generates and radiates a magnetic field via an antenna of the power device with the advantage that no wire is needed to charge the portable device. In some of these systems, the power device just radiates the magnetic field and some newer systems comprise a feedback loop from the portable device to the power device to regulate the power of the magnetic field.

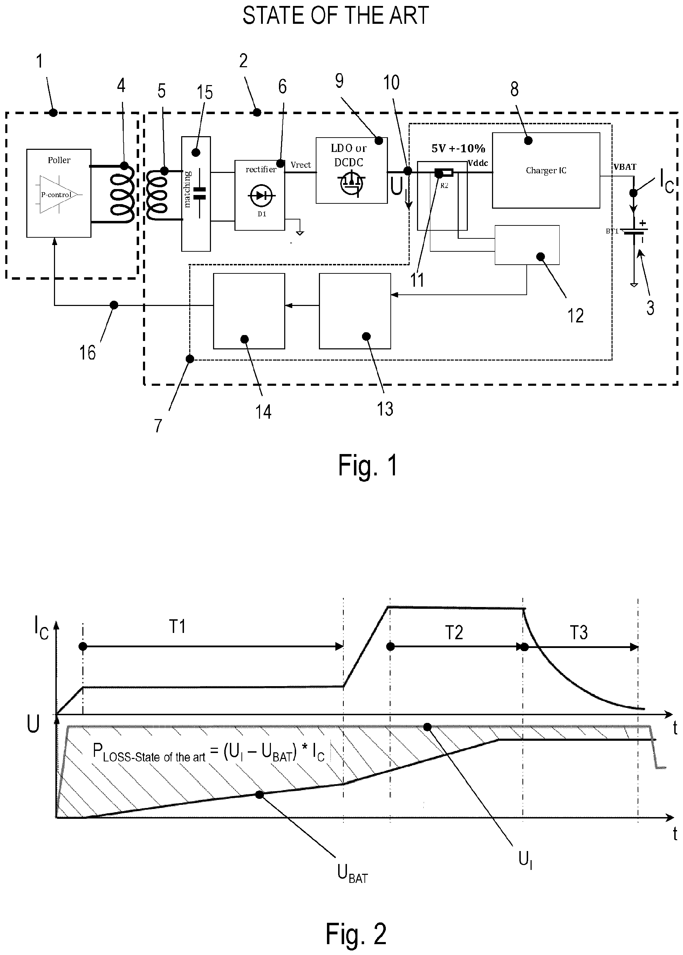

Figure 1 shows such a system of a power device 1 and a portable device 2 with a battery 3, know to a person skilled in the art. Such a system is for instance described in the NFC Forum^{™} Technical Specification Version 1.0. The power device 1 called "poller" comprises an antenna 4 that radiates a magnetic field with the frequency of 13,56MHz. The portable device 2 called "listener" comprises an antenna 5 exposed to the magnetic field emitted by the power device 1. A matching circuit 15 matches the impedance of the output pins of the antenna 5 to input pins of a rectifier 6 that uses a bridge rectifier to rectify the antenna signal and to provide a DC voltage. A charge stage 7 of the portable device 2 is used to charge the battery 3. As the charge stage 7 comprises a charger IC 8 that needs a power voltage of 5V +/- 10% and a DC/DC converter 9 is used to convert the DC voltage provided by rectifier 6 to an appropriate input voltage U_{I} at an input pin 10 of charge stage 7.

Battery 3 is a Li-Ion battery that needs to be charged by charge stage 7 in different time periods with different charge currents I_{C} and charge voltages. To achieve that, charge stage 7 comprises a serial ohmic resistance component 11 in the path between input pin 10 and battery 3 to generate a measuring voltage, which is measured by current measurement stage 12 to measure the charge current I_{C} to charge the battery 3. Charge stage 7 furthermore comprises a digital control stage 13 that generates a power adjustment information 16 in case the input voltage U_{I} at input pin 10 and/or the charge current I_{C} to charge the battery 3 are too low or too high. Such power adjustment information 16 is provided by the digital control stage 13 to a Cless Communication stage 14, which complies to the NFC communication protocol to communicate the power adjustment information 16 to the power device 1. With this feedback loop from portable device 2 to power device 1, charge stage 7 can request more or less power in the magnetic field provided by the power device 1.

Figure 2 shows a time diagram of the charge current Ic in three different time periods T1, T2 and T3 to load battery 3. Figure 2 furthermore shows input voltage U_{I} at input pin 10 of charge stage 7 and the actual battery voltage U_{BAT} during the time periods T1, T2 and T3 to load battery 3. To actually load battery 3 only battery voltage U_{BAT} multiplied with charge current Ic is used. Therefore loss power P_{LOSS} = (U_{I} - U_{BAT}) ^{∗} I_{C} is power that needs to be generated by power device 1 in the magnetic field and needs to be wasted in portable device 2 at the end what heats-up portable device 2 and what is a big disadvantage. If e.g. earphones should be loaded in a closed cabinet of a charger this heat generated by the loss power P_{LOSS} may cause damage of the earphones or the charger. If power device 1 is powered by a battery power pack, this wasted loss power P_{LOSS} furthermore reduces the number of load cycles possible with the battery power pack.

### SUMMARY OF THE INVENTION

It is an object of the invention to provide a system of a power device and a portable device for wireless charging of the battery of the portable device with a feedback loop to reduce the wasted loss power P_{LOSS}.

This object is achieved in a system with a charge stage that comprises a measuring stage, to measure the actual voltage of the battery, and that comprises a charge voltage control stage, that is built to generate the power adjustment information for the power device to increase or to decrease the power of the magnetic field to steer the input voltage of the charge stage to essentially follow the actual voltage of the battery.

This inventive concept enables a substantial reduction of the loss power P_{LOSS} as only as much power as needed to actually charge the battery is requested from and delivered by the power device in the magnetic field. As the measurement of the charge current is realized by a transistor in the path between the input pin and the output pin of charge stage a separate serial ohmic resistance component can be omitted what further decreases loss power in the portable device.

These and other aspects of the invention will be apparent from and elucidated with reference to the embodiments described hereinafter. The person skilled in the art will understand that various embodiments may be combined.

### BRIEF DESCRIPTION OF THE DRAWINGS

Figure 1 shows a system known to a person skilled in the art, which system comprises a power device and a portable device with a battery to be charged wireless.
Figure 2 shows a time diagram of the charge current to charge the battery and an input voltage of a charge stage of the portable device of the system according to figure 1.
Figure 3 shows a system according to the invention, which comprises a power device and a portable device with a battery to be charged wireless.
Figure 4 shows a time diagram of the charge current and a charge voltage to charge the battery of the portable device of the system according to figure 3.

### DETAILED DESCRIPTION OF EMBODIMENTS

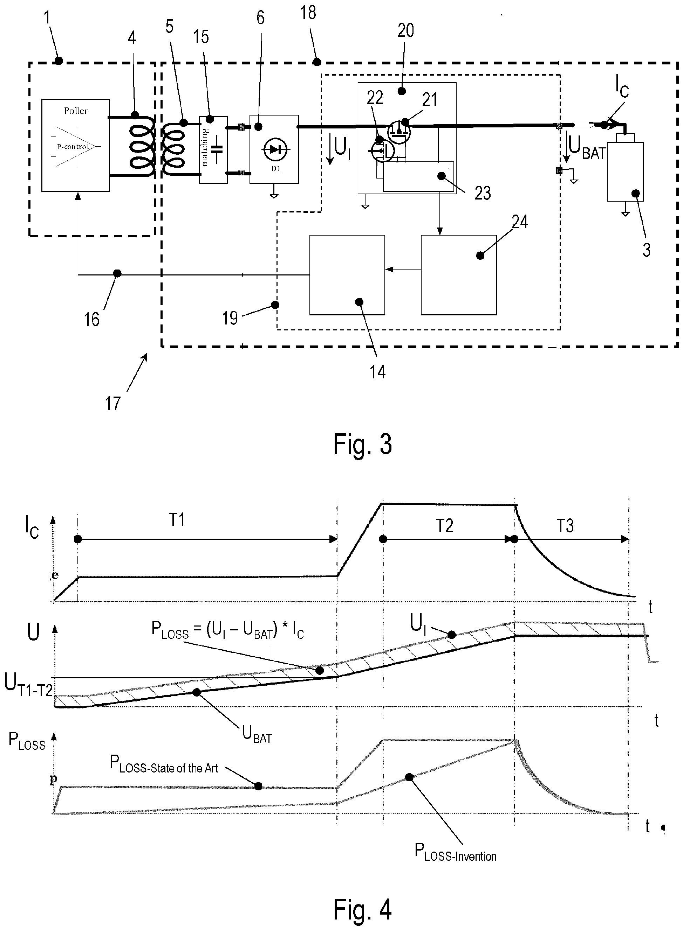

Figure 3 shows a first embodiment of a system 17 of a power device 1 and a portable device 18 with a battery 3 according to the invention. The same reference signs are used for stages that have the same technical function as already described in the system of figure 1 known to a person skilled in the art. The power device 1 called "poller" comprises an antenna 4 that radiates a magnetic field with the frequency of 13,56MHz. Power device 1 could be a charging device connected to the power grid or powered by a battery power pack. The portable device 18 called "listener" comprises an antenna 5 exposed to the magnetic field emitted by power device 1. The portable device 18 could be any device like e.g. earphones or a mobile phone with a wireless interface and a battery. A matching circuit 15 matches the impedance of the output pins of the antenna 5 to input pins of a rectifier 6 that uses a bridge rectifier to rectify the antenna signal and to provide a DC voltage as input voltage U_{I} at a charge stage 19. Charge stage 19 of the portable device 18 is used to charge the battery 3 and comprises charge means 20 with a serial MOS Fet 21 in the path of charge current I_{C} and a parallel MOS Fet 22 parallel to battery 3. Charge stage 19 furthermore comprises a measuring stage 23, to measure the actual voltage U_{BAT} of the battery 3 during the process of loading, which measuring stage 23 furthermore processes a multi loop control.

Measuring stage 23 is setting the proper charging current according to the battery state (actual voltage U_{BAT} of the battery) by sensing the current flowing through MOS Fet 22 and regulating the common gate voltage of MOS Fet 21 and MOS Fet 22 accordingly. The current in MOS Fet 22 can be measured e.g. by measuring the voltage drop on a resistance in series to MOS Fet 22. The MOS Fet 22 is a replica device to MOS Fet 21 which means the current in MOS Fet 21 is a multiple of the current in MOS Fet 22 according to the w/1 ratio of this two transistors. This provides the advantage that serial ohmic resistant component 11 in the path of the charge current I_{C} may be omitted what reduces the heat and loss power in portable device 18.

Measuring stage 23 is also measuring the voltage drop over MOS Fet 21. With that information charge voltage control stage 24 is built to generate a power adjustment information 16 for the power device 1 to increase or to decrease the power of the magnetic field to steer the input voltage U_{I} of the charge stage 19 to essentially follow the actual voltage U_{BAT} of the battery 3 and keeping by that the voltage drop on MOS Fet 21 as low as possible.

Battery 3 is a Li-Ion battery that needs to be charged by charge stage 19 in different time periods with different charge currents I_{C} and charge voltages. Figure 4 shows a time diagram of the charge current Ic in three different time periods T1, T2 and T3 to load battery 3 with the system according to figure 3. In the first time period T1 at the beginning of the charging process charge stage 19 charges the battery 3 with a constant first charge current I_{C} as power source, which first charge current I_{C} is about 10% of the maximal charge current I_{C} to be used for the particular battery 3. After the actual voltage U_{BAT} of battery 3 achieved a voltage U_{T1-T2} charging in the second time period T2 starts wherein charge stage 19 charges the battery 3 with a constant second charge current I_{C} as power source, which second charge current I_{C} is higher than the first charge current and close to 100% of the maximal charge current I_{C} to be used for the particular battery 3. In the third time period T3, after the actual voltage U_{BAT} of the battery 3 achieved it's target voltage, the charging mode is switched to constant voltage charging and charge current Ic is decreasing automatically according to the battery's charging condition until the charger stops charging e.g. when the charging current has decreased to 10% of the maximum charging current. The principle to load a Li-Ion battery in time periods is known to a person skilled in the art.

Charge stage 19 furthermore comprises a Cless Communication stage 14, which complies to the NFC communication protocol to communicate the power adjustment information 16 from charge voltage control stage 24 to power device 1. With this feedback loop from portable device 2 to power device 1, charge stage 19 can request more or less power in the magnetic field provided by the power device 1.

Figure 4 shows a comparison of the loss power P_{LOSS} = (U_{I} - U_{BAT}) ^{∗} I_{C} for the systems shown in figure 1 and 3. As explained above state of the art system shown in figure 1 generates P_{LOSS-State of the Art} and the inventive system 17 shown in figure 3 only generates P_{LOSS-Invention}. This clearly shows the advantages of the invention to reduce loss power P_{LOSS} in the system to load battery 3 of portable device 18. In the system 17 there is no need for power device 1 to generate this high loss power P_{LOSS-State of the Art} in the magnetic field and no need to transform this loss power into heat in portable device 18 later on.

In a further embodiment of the invention charge stage 19 and/or charge means 20 could be realized by different hardware and software components to enable the inventive principle to steer the power device 1 to increase or to decrease the power of the magnetic field to achieve that the input voltage of the charge stage essentially follows the actual voltage of the battery what significantly reduces the power loss. To *"follow the actual voltage of the battery"* has to be interpreted as to follow indeed exact the actual voltage of the battery or to follow the actual voltage of the battery with an offset voltage e.g. the voltage drop at MOS Fet 21.

By reducing power loss on the listener side an additional advantage achieved is that the PCB size can be reduced, because there is no need to achieve such a low temperature coefficient to get rid of the heat compared to the state of the art solution.

## Claims

1. System (17) of a power device (1) and a portable device (18) for wireless charging of a battery (3) of the portable device (18), which power device (1) comprises an antenna (4) to receive power adjustment information (16) from the portable device (18) to increase or to decrease the power of the magnetic field emitted by the antenna (4) of the power device (1) and which portable device (18) comprises an antenna (5) exposed to the magnetic field and connected via a matching stage (15) to a rectifier stage (6) to rectify an antenna signal and to provide an input voltage (U_{I}) at an input pin of a charge stage (19) that provides a first charge current (I_{C}) at an output pin connected to the battery (3) to charge the battery (3) for a first period of time (T1) as power source with the constant first charge current (I_{C}) **characterized in,**
**that** the charge stage (19) comprises a measuring stage (23), to measure the actual voltage (U_{BAT}) of the battery (3), and that comprises a charge voltage control stage (24), that is built to generate the power adjustment information (16) for the power device (1) to increase or to decrease the power of the magnetic field to steer the input voltage (U_{I}) of the charge stage (19) to essentially follow the actual voltage (U_{BAT}) of the battery (3).

2. System (17) according to claim 1, wherein the charge voltage control stage (24) steers the charge voltage to follow the actual voltage (U_{BAT}) of the battery (3) with a fixed voltage above the actual voltage (U_{BAT}) of the battery (3), which fixed voltage is the voltage drop of the charge stage (19) between its input pin and output pin with the charge current (I_{C}) provided at the output pin.

3. System (17) according to claim 1 or 2, which charge stage (19) comprises a transistor (21) in the path between the input pin and the output pin to sense and regulate the charge current (I_{C}).

4. System (17) according to any of the claims 1 to 3, wherein the current path from the rectifier stage (6) to the battery (3) is free of a serial ohmic resistance component.

5. System (17) according to any of the claims 1 to 4, which charge stage (19) is built to provide a second charge current (I_{C}) at the output pin to charge the battery (3) for a second period of time (T2) as power source with the constant second charge current (I_{C}).

6. System (17) according to any of the claims 1 to 5, which power device (1) is powered by a battery power pack.

7. System (17) according to any of the claims 1 to 6, which power adjustment information (16) is transmitted via a wireless data interface that is realized as NFC interface that complies with the standard ISO18.092.

## Amended claims

### Amended claims in accordance with Rule 137(2) EPC.

1. System (17) comprising a power device (1) and a portable device (18), wherein the portable device (18) comprises a battery (3) and the power device (1) is configured to wirelessly charge the battery, which portable device (18) furthermore comprises:
- an antenna (4),
- a matching stage (15),
- a rectifier stage (6), and
- a charge stage (19) comprising an input pin connected to the rectifier stage (6) and an output pin connected to the battery,
wherein the antenna is configured to be exposed to the magnetic field and connected via the matching stage (15) to the rectifier stage (6) to rectify an antenna signal and to provide an input voltage (U_{I}) at the input pin of the charge stage (19), the charge stage (19) being configured to provide a first charge current (Ic) at the output pin to charge the battery (3) for a first period of time (T1) as power source with the constant first charge current (Ic), which power device (1) is configured to receive power adjustment information (16) via the antenna (4) from the portable device (18) to increase or to decrease the power of the magnetic field emitted by the antenna (4) of the power device (1), **characterized in,**
**that** the charge stage (19) comprises a measuring stage (23), to measure the actual voltage (U_{BAT}) of the battery (3), and that the charge stage (19) comprises a charge voltage control stage (24), that is built to generate the power adjustment information (16) for the power device (1) to increase or to decrease the power of the magnetic field to steer the input voltage (U_{I}) of the charge stage (19) to essentially follow the actual voltage (U_{BAT}) of the battery (3), and that the charge stage (19) comprises a transistor (21) that connects the input pin with the output pin to sense and regulate the charge current (I_{C}) and that the charge voltage control stage (24) is configured to steer the charge voltage to follow the actual voltage (U_{BAT}) of the battery (3) with a fixed voltage above the actual voltage (U_{BAT}) of the battery (3), which fixed voltage is the voltage drop of the transistor (21) between the input pin and output pin.

2. System (17) according to claim 1, which charge stage (19) is built to provide a second charge current (I_{C}) at the output pin to charge the battery (3) for a second period of time (T2) as power source with the constant second charge current (Ic).

3. System (17) according to any of the claims 1 to 2, which power device (1) is powered by a battery power pack.
